# EUROPÄISCHE PATENTANMELDUNG

(11) **EP 4 714 687 A1**
(43) Veröffentlichungstag der Anmeldung: **25.03.2026**
(21) Anmeldenummer: 24201310.0
(22) Anmeldetag: 19.09.2024
(51) Int. Cl.: B60D 1/06, B60D 1/24, B60D 1/46, B60D 1/58, B60D 1/62

(54) **KUPPLUNGSMODUL UND NUTZFAHRZEUG**

(71) Anmelder: Deere & Company, Moline, IL 61265 (US)
(72) Erfinder: SCHWALM, THOMAS, 68163 Mannheim (DE); WOLF, JONAS, 68163 Mannheim (DE); RIFFEL, JAN, 68163 Mannheim (DE)
(74) Vertreter: Dehnhardt, Florian Christopher

(57) **Zusammenfassung**

Die Erfindung betrifft ein Kupplungsmodul (10) zur lösbaren Befestigung an einem Nutzfahrzeug (42). Das Kupplungsmodul (10) weist eine Kupplungseinrichtung (12) und eine Sensoreinrichtung (14) auf. Die Kupplungseinrichtung (12) ist zur lösbaren Kopplung mit einem Anhänger oder einem gezogenen Arbeitsgerät ausgebildet. Die Sensoreinrichtung (14) enthält eine Trägerplatte (16) mit mindestens einem Aufnahmelager (18) zur Aufnahme mindestens eines Lastkraftsensors (20). Die Erfindung betrifft weiter ein Nutzfahrzeug (42, 70), umfassend ein solches Kupplungsmodul (10).

## Beschreibung

Die Erfindung betrifft ein Kupplungsmodul zur lösbaren Befestigung an einem Nutzfahrzeug. Die Erfindung betrifft außerdem ein Nutzfahrzeug mit einem daran lösbar befestigten Kupplungsmodul.

An Nutzfahrzeugen befestigte Kupplungsmodule weisen eine Kupplungseinrichtung auf, welche zur lösbaren Kopplung mit einer Gegenkupplung eines Anhängers oder eines gezogenen Arbeitsgerätes ausgebildet ist. Hierdurch kann der Anhänger oder das gezogene Arbeitsgerät an das als Zugfahrzeug wirksame Nutzfahrzeug gekoppelt werden. Während der Zugfahrten und im Stand wirken durch den Anhänger oder das gezogene Arbeitsgerät verursachte Lastkräfte über das Kupplungsmodul auf das Zugfahrzeug ein und können dessen Zustand oder Fahrverhalten beeinflussen.

Aufgabe der vorliegenden Erfindung ist es, auf ein Nutzfahrzeug als Teil eines Gespanns einwirkende Lastkräfte eines Anhängers oder eines gezogenen Arbeitsgerätes technisch einfach zu erfassen.

Diese Aufgabe wird durch ein Kupplungsmodul mit den Merkmalen des Patentanspruchs 1 und ein Nutzfahrzeug mit den Merkmalen des Patentanspruchs 10 gelöst. Die abhängigen Ansprüche beziehen sich auf besonders vorteilhafte Ausführungsformen der Erfindung.

Gemäß Anspruch 1 wird ein Kupplungsmodul zur lösbaren Befestigung an einem Nutzfahrzeug vorgeschlagen. Dieses Kupplungsmodul weist eine Kupplungseinrichtung und eine Sensoreinrichtung auf. Die Kupplungseinrichtung ist zur lösbaren Verbindung bzw. Kopplung mit einer Deichsel eines Anhängers oder eines gezogenen Arbeitsgerätes ausgebildet. Die Sensoreinrichtung enthält eine Trägerplatte, welche mindestens ein Aufnahmelager zur Aufnahme mindestens eines Lastkraftsensors aufweist.

Mittels der Sensoreinrichtung erfüllt das Kupplungsmodul neben der mechanischen Kopplungsfunktion eine zusätzliche Sensorfunktion. Hierdurch können von einem Anhänger auf das als Zugfahrzeug wirksame Nutzfahrzeug einwirkende Lastkräfte mit geringem apparativen Aufwand technisch effizient erfasst werden.

Der Lastkraftsensor generiert (z.B. optische oder elektrische) Sensorsignale, welche durch geeignete technische Mittel (z.B. eine Steuereinheit) verarbeitet werden können. Die verarbeiteten Sensorsignale können beispielsweise zur Aufzeichnung eines aktuellen Lastkraftverhaltens am Nutzfahrzeug oder eines physikalischen Zustands des Nutzfahrzeugs und/oder des Kupplungsmoduls verwendet werden oder als Signale zur Steuerung von Fahrzeugfunktionen des Nutzfahrzeugs herangezogen werden. Hierdurch kann mit geringem technischen Aufwand auch bei ungünstigen Lastkraftverhältnissen die Fahrzeugsicherheit unterstützt werden.

Beispielsweise kann das Kupplungsmodul zur Überwachung und Einhaltung von zulässigen Stützlasten während des Betriebs des Nutzfahrzeugs als Zugfahrzeug eingesetzt werden. Außerdem kann das Bremsverhalten des Zugfahrzeugs während des Fahrzeugbetriebs in Abhängigkeit von den erfassten Lastkräften gesteuert und/oder geregelt werden. Des Weiteren kann das Kupplungsmodul in Testzentren die technische Entwicklung und Verifizierung von Fahrzeugkomponenten unterstützen. Die gewonnenen Lastkraftdaten können auch zur technischen Auslegung der Haltbarkeit tragender Fahrzeugkomponenten herangezogen werden.

Vom Zugfahrzeug gezogene Anhänger oder Arbeitsgeräte können unterschiedliche Funktionen erfüllen. Während der Anhänger vorzugsweise auf eine Transportfunktion für verschiedene Güter beschränkt ist, kann das gezogene Arbeitsgerät eine spezifische Arbeitsfunktion haben. Beispielsweise ist das Arbeitsgerät als ein Futtermischwagen, eine Feldspritze, eine Ballenpresse oder ein Güllefass ausgebildet.

In einer bevorzugten Ausführungsform sind in einer Umfangsrichtung der Trägerplatte verteilt mehrere Aufnahmelager angeordnet. Jedes Aufnahmelager dient der Aufnahme für zumindest einen Lastkraftsensor. Die Positionierung von mehreren Lastkraftsensoren innerhalb der Sensoreinrichtung ermöglicht eine exaktere Erfassung der Lastkräfte. Insbesondere können einzelne unterschiedlich ausgerichtete Lastkraftkomponenten erfasst werden.

Vorzugsweise weist die Trägerplatte in Umfangsrichtung mehrere abgewinkelt miteinander verbundene Plattenabschnitte auf. Durch diese Konstruktion können mehrere Lastkraftsensoren entlang der einzelnen Plattenabschnitte derart verteilt angeordnet werden, dass Lastkräfte bzw. aktuelle Lastkraftprofile am Nutzfahrzeug bezüglich unterschiedlicher Ausrichtung der Kraftkomponenten mit besonders hoher Genauigkeit erfassbar sind.

Vorteilhaft sind zwei benachbarte Plattenabschnitte der Trägerplatte rechtwinklig zueinander angeordnet. Insbesondere weist die Trägerplatte einen rechteckigen oder quadratischen Plattenquerschnitt auf.

In einer weiteren bevorzugten Ausführungsform weist ein Plattenabschnitt der Trägerplatte, insbesondere jeder Plattenabschnitt, mindestens zwei Aufnahmelager zur Aufnahme jeweils eines Lastkraftsensors auf. Hierdurch können auf das Nutzfahrzeug einwirkende Lastkräfte und deren Kraftkomponenten noch präziser erfasst werden.

Vorzugsweise weist das Aufnahmelager in oder an dem Material der Trägerplatte eine Vertiefung auf. Insbesondere bildet diese Vertiefung das Aufnahmelager zur Aufnahme mindestens eines Lastkraftsensors. Die Vertiefung hat beispielsweise einen langlochartigen oder einen rechteckigen Querschnitt. Die Vertiefung kann beispielsweise durch Fräsen des Materials der Trägerplatte hergestellt werden.

Vorteilhaft sind an der Trägerplatte mindestens zwei Vertiefungen mit unterschiedlichen Vertiefungsrichtungen vorgesehen. Dies ermöglicht in bestimmten Bereichen der Trägerplatte, z.B. an einem Plattenabschnitt, unterschiedlich angeordnete und/oder ausgerichtete Lastkraftsensoren. Hierdurch kann die Trägerplatte sehr raumsparend mehrere Lastkraftsensoren aufnehmen. Entsprechend kann die Sensoreinrichtung bei raumsparender Dimensionierung unterschiedlich ausgerichtete Kraftkomponenten erfassen.

Weiter vorzugsweise ist der Lastkraftsensor an einer Innenwand der Vertiefung gelagert. Diese Lagerung bzw. Positionierung des Lastkraftsensors kann eine besonders sensitive Erfassung von physikalischen Veränderungen der Trägerplatte, wie etwa Lastkräfte, Materialdehnungen und Scherspannungen, unterstützen.

Insbesondere ermöglicht das Kupplungsmodul eine dreiaxiale Kraftmessung, d.h. eine Messung von drei unabhängigen Kraftkomponenten, welche durch die Kupplungseinrichtung in das Nutzfahrzeug eingeleitet werden. Hierbei kann die räumliche Erstreckung der Trägerplatte durch eine X-, Y- und Z-Richtung repräsentiert werden, wobei die Rahmenebene der Trägerplatte in einer durch die Y-Richtung und die Z-Richtung aufgespannten Ebene einliegt. Dabei sind die Y-Richtung und die Z-Richtung koordinatensystemartig rechtwinklig zueinander und auch rechtwinklig zu einer X-Richtung angeordnet. Dabei ist die X-Richtung im Betriebszustand des Kupplungsmoduls insbesondere parallel zu einer Längsachse bzw. Längsrichtung des Nutzfahrzeugs ausgerichtet. Die Y-Richtung verläuft insbesondere parallel zu einer Querachse bzw. Querrichtung des Nutzfahrzeugs, während die Z-Richtung insbesondere parallel zu einer Hochachse bzw. Hochrichtung des Nutzfahrzeugs angeordnet ist. Auf diese Weise können bei einer entsprechenden räumlichen Anordnung der Lastkraftsensoren einwirkende Lastkräfte hinsichtlich ihrer X-, Y- und Z-Komponenten erfasst werden.

Vorteilhaft sind die Kupplungseinrichtung und die Trägerplatte der Sensoreinrichtung miteinander lösbar verbunden. Hierdurch kann die Sensorfunktion auf technisch einfache Weise mit unterschiedlichen Kupplungseinrichtungen kombiniert werden. Somit kann das Kupplungsmodul für unterschiedlichste Anhänger oder Anhängertypen (z.B. Starrdeichselanhänger, Gelenkdeichselanhänger) verwendet werden. Alternativ ist die Kupplungseinrichtung mit der Trägerplatte der Sensoreinrichtung einstückig hergestellt.

In einer weiteren bevorzugten Ausführungsform weist der Lastkraftsensor mindestens einen Dehnungsmessstreifen auf. Insbesondere besteht der Lastkraftsensor aus mindestens einem solchen Dehnungsmessstreifen. Der Dehnungsmessstreifen ist insbesondere als ein optischer oder ein elektrischer Dehnungsmessstreifen ausgebildet. In das Kupplungsmodul eingeleitete Lastkräfte verursachen Scherspannungen im Bereich der vorhandenen Aufnahmelager. Der Dehnungsmessstreifen generiert bei solchen auftretenden Lastkräften bzw. Materialdehnungen entsprechende Signale, welche auf geeignete Weise verarbeitet werden. Hierbei werden die Sensorsignale vorzugsweise von einem Messverstärker erfasst und von nachgeschalteten Funktionseinheiten (z.B. zur Aufzeichnung, Regelung, Steuerung) verarbeitet.

Die Erfindung betrifft weiter ein Nutzfahrzeug mit einem daran lösbar befestigten Kupplungsmodul nach einem der Ansprüche 1 bis 9. Das erfindungsgemäße Nutzfahrzeug weist die oben beschriebenen Vorteile des erfindungsgemäßen Kupplungsmoduls auf. Dabei enthält das Kupplungsmodul eine Sensoreinrichtung mit einer Trägerplatte, welche mindestens ein Aufnahmelager zur Aufnahme mindestens eines Lastkraftsensors aufweist. Mit Hilfe des Kupplungsmoduls und seines mindestens einen Lastkraftsensors wird eine kostengünstige technische Funktionseinheit zur Generierung aktueller Lastkraftdaten bereitgestellt. In Abhängigkeit von diesen Lastkraftdaten kann der Fahrzustand des Nutzfahrzeugs und dessen Fahrverhalten während des Ziehens eines Anhängers oder Arbeitsgerätes sicherheitstechnisch sinnvoll unterstützt werden, z.B. zur Überwachung und Einhaltung von zulässigen Stützlasten oder auch zur Abstimmung bzw. Regelung des Fahrverhaltens.

Vorzugsweise ist das Kupplungsmodul, insbesondere deren Sensoreinrichtung, zwischen zwei am Nutzfahrzeug befestigten Tragaufnahmen angeordnet und an diesen Tragaufnahmen lösbar fixiert. Hierbei können standardmäßig im Heckbereich des Nutzfahrzeugs (z.B. eines Traktors) vorhandene mechanische Tragaufnahmen (z.B. Tragschienen) verwendet werden und eine mechanisch stabile Fixierung der Sensoreinrichtung und des gesamten Kupplungsmoduls unterstützen.

Alternativ zu der vorgenannten Anordnung des Kupplungsmoduls im Heckbereich des Nutzfahrzeugs kann das Kupplungsmodul auf geeignete technische Weise auch im Frontbereich des Nutzfahrzeugs positioniert werden.

Vorteilhaft ist mindestens eine Tragaufnahme, insbesondere sind beide Tragaufnahmen, in einer Fahrzeug-Querrichtung durch mehrere Traglöcher perforiert, welche in einer Fahrzeug-Hochrichtung aneinandergereiht sind. Dabei fluchtet ein Tragloch der Tragaufnahme in der Fahrzeug-Querrichtung mit einem Montageloch des Kupplungsmoduls. Das Zusammenwirken von Traglöchern der Tragaufnahmen und Montagelöchern des Kupplungsmoduls ermöglicht eine montagetechnisch einfache und stabile Höhenverstellbarkeit des Kupplungsmoduls. Dies unterstützt eine kompatible Verwendung des Kupplungsmoduls für unterschiedliche Anhängertypen, z.B. eine relativ niedrige Montageposition des Kupplungsmoduls für Starrdeichsel-Anhänger und eine relativ hohe Montageposition des Kupplungsmoduls für Gelenkdeichsel-Anhänger.

Das Kupplungsmodul enthält vorzugsweise mehrere Montagelöcher, insbesondere zwei in Fahrzeug-Querrichtung gegenüberliegende Montagelöcher. Die vorhandenen Montagelöcher können als Perforationen (z.B. Bohrungen) das Kupplungsmodul, insbesondere die Sensoreinrichtung, perforieren oder als Vertiefungen im Kupplungsmodul ausgebildet sein. Zur Realisierung der lösbaren Fixierung des Kupplungsmoduls an den Tragaufnahmen ist beispielsweise eine Steck- oder Schraubverbindung vorgesehen.

Für eine montagetechnisch einfache lösbare Fixierung des Kupplungsmoduls sind das Tragloch der Tragaufnahme und das zugeordnete Montageloch des Kupplungsmoduls in einer bevorzugten Ausführungsform von einem Montagebolzen durchsetzt. Mit dem Montagebolzen kann eine mechanisch stabile und gleichzeitig kostengünstige Steck- oder Schraubverbindung für die lösbare Fixierung realisiert werden.

Vorteilhaft werden die lösbare Fixierung des Kupplungsmoduls und die Positionierung des Lastkraftsensors unterstützt, indem der Montagebolzen entlang der Fahrzeug-Querrichtung lösbar arretiert ist. Hierzu können der Montagebolzen und die Sensoreinrichtung von einem in Fahrzeug-Längsrichtung verlaufenden Arretierstift durchsetzt sein. Der Arretierstift wiederum kann durch geeignete mechanische Mittel an dem Kupplungsmodul lösbar lagegesichert sein.

Das Nutzfahrzeug ist vorzugsweise als ein landwirtschaftliches Zugfahrzeug, insbesondere. Traktor, ausgebildet. Bei Gespannfahrten können mittels des Kupplungsmoduls auftretende Lastkräfte des Anhängers oder gezogenen Arbeitsgerätes erfasst werden. Das Fahrverhalten des Zugfahrzeugs kann unter Berücksichtigung der erfassten und verarbeiteten Lastkräfte entsprechend verbessert werden.

Die Erfindung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine perspektivische Explosionsdarstellung des erfindungsgemäßen Kupplungsmoduls in einer ersten Ausführungsform, und
- Fig. 2: eine perspektivische Explosionsdarstellung des erfindungsgemäßen Kupplungsmoduls in einer weiteren Ausführungsform, und
- Fig. 3: eine Draufsicht auf eine Sensoreinrichtung als Bestandteil des erfindungsgemäßen Kupplungsmoduls, und
- Fig. 4: eine geschnittene Seitenansicht der Sensoreinrichtung gemäß der Schnittlinie IV-IV in Fig. 3, und
- Fig. 5: eine perspektivische Schnittdarstellung der Sensoreinrichtung gemäß Fig. 3 mit einer parallel zur Zeichenblattebene verlaufenden Schnittebene, und
- Fig. 6: eine perspektivische Darstellung zweier Tragschienen eines landwirtschaftlichen Zugfahrzeugs mit einem daran lösbar montierten erfindungsgemäßen Kupplungsmodul.

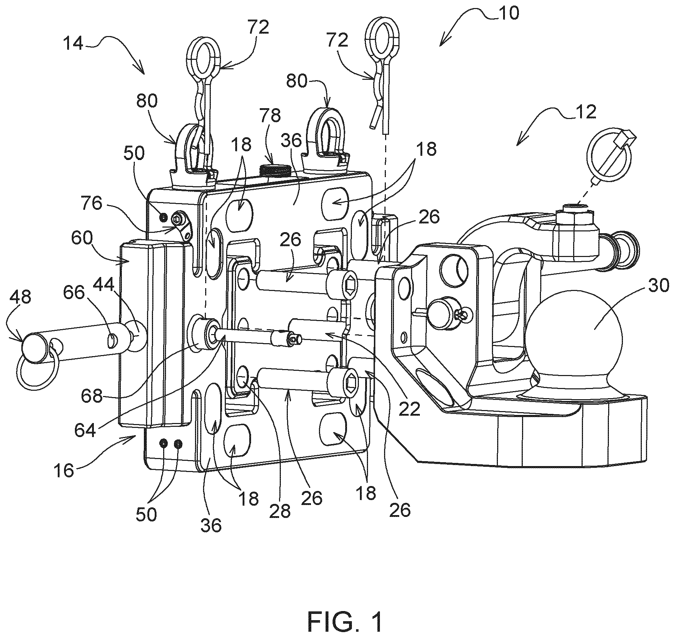

Fig. 1 zeigt ein Kupplungsmodul 10 mit einer Kupplungseinrichtung 12 und einer Sensoreinrichtung 14. Die Kupplungseinrichtung 12 ist zur lösbaren Verbindung mit einer Deichsel eines hier nicht dargestellten Anhängers oder Arbeitsgerätes ausgebildet. Die Sensoreinrichtung 14 weist Trägerplatte 16 auf, welche mehrere Aufnahmelager 18 aufweist. Die Aufnahmelager 18 dienen jeweils der Aufnahme mindestens eines Lastkraftsensors 20, welcher insbesondere als ein Dehnungsmessstreifen ausgebildet ist.

Die Kupplungseinrichtung 12 und die Sensoreinrichtung 14 sind miteinander lösbar verbindbar. Während der Montage kann die Kupplungseinrichtung 12 mittels zweier Fixierbolzen 22 an zwei Befestigungsabschnitten 24 der Trägerplatte 16 fixiert werden. Mittels vier Befestigungsschrauben 26 und korrespondierender Innengewinde 28 an den Befestigungsabschnitten 24 werden die Kupplungseinrichtung 12 und die Sensoreinrichtung 14 miteinander lösbar verspannt.

In Fig. 1 ist die Kupplungseinrichtung 12 mit einer Kupplungskugel 30 zur Ankopplung eines Starrdeichsel-Anhängers oder gezogenen Arbeitsgerätes ausgestattet.

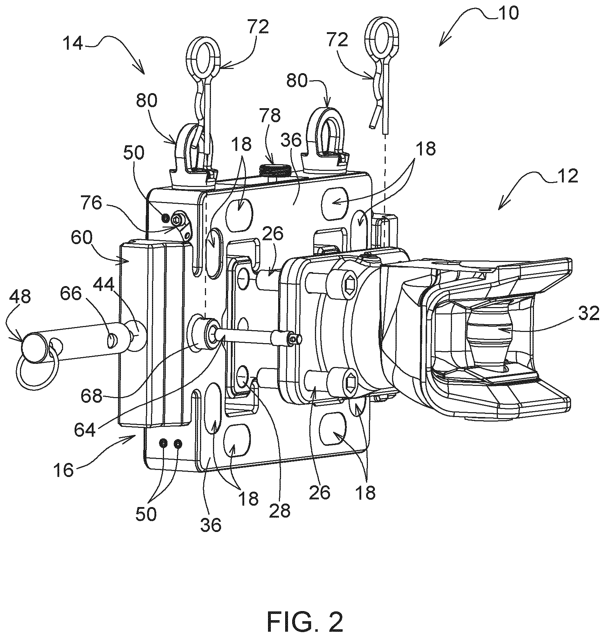

In Fig. 2 ist die im Detail lediglich teilweise dargestellte Kupplungseinrichtung 12 mit einer automatischen Bolzenkupplung 32 ausgestattet. Diese Kupplungseinrichtung 12 wird üblicherweise für einen Gelenkdeichsel-Anhänger verwendet. Analog zur Ausführungsform gemäß Fig. 1 ist auch die Kupplungseinrichtung 12 gemäß Fig. 2 durch die Befestigungsschrauben 26 mit der Sensoreinrichtung 14 lösbar verbindbar.

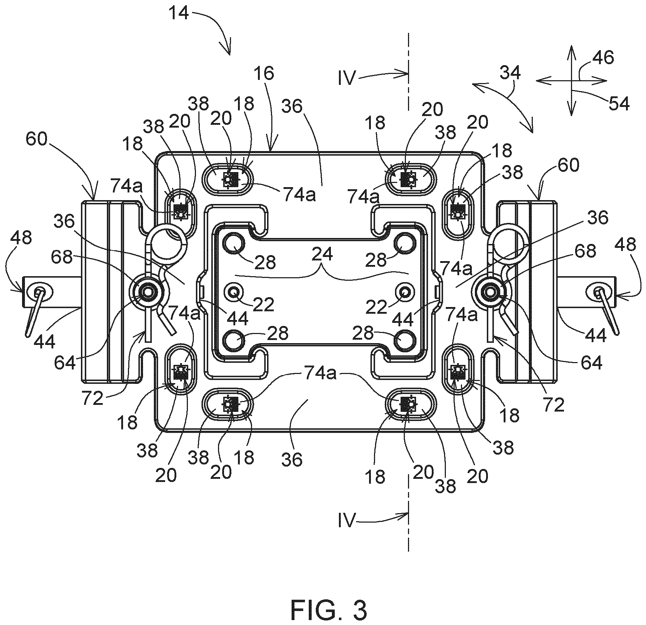

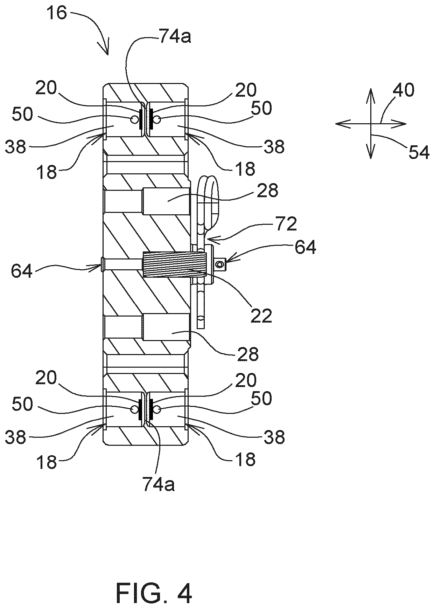

Fig. 3 zeigt die Trägerplatte 16, an welcher entlang einer Umfangsrichtung 34 mehrere Aufnahmelager 18 angeordnet sind. Die Trägerplatte 16 weist entlang der Umfangsrichtung 34 vier rechtwinklig zueinander angeordnete und miteinander verbundene Plattenabschnitte 36 auf. Jeder Plattenabschnitt 36 enthält vier Aufnahmelager 18, von denen jeweils zwei Aufnahmelager 18 an einer Vorderseite und einer Rückseite angeordnet und zueinander symmetrisch positioniert sind. In der gedachten Symmetrieebene ist ein wandartiger Steg 74a angeordnet, welcher zwei symmetrisch angeordnete Aufnahmelager 18 voneinander trennt (Fig. 4). Der Steg 74a ist insbesondere ein einstückiger Materialbestandteil der Trägerplatte 16.

Alternativ weist nur eine Seite (entweder die Vorderseite oder die Rückseite) des Plattenabschnittes 36 zwei Aufnahmelager 18 mit jeweils einem Steg 74a bzw. einer Innenwand für einen Lastkraftsensor 20 auf.

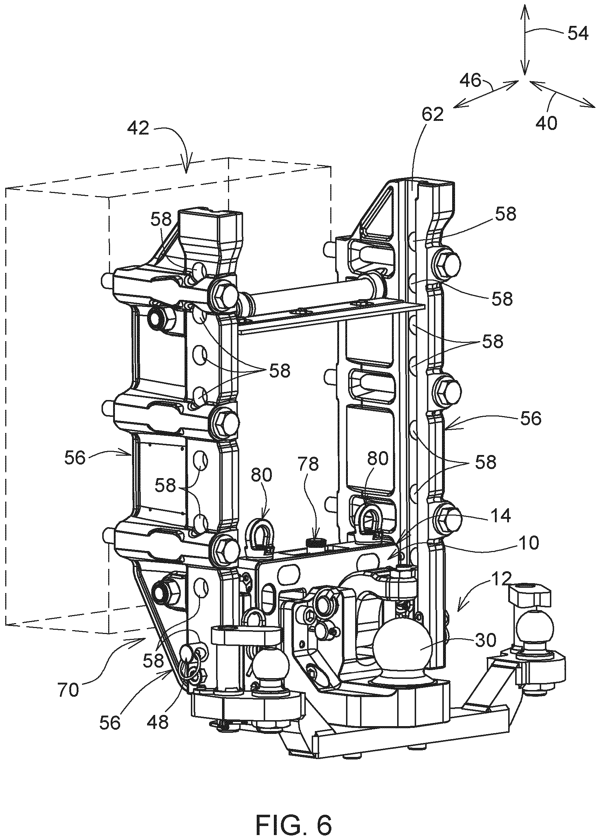

In Fig. 4 ist erkennbar, dass das Aufnahmelager 18 eine Vertiefung 38 aufweist bzw. eine solche Vertiefung 38 bildet. Die Vertiefung 38 ist durch den Steg 74a begrenzt, welcher für die Vertiefung 38 als eine Innenwand wirksam ist. Der Lastkraftsensor 20 ist an dem Steg 74a fixiert bzw. gelagert, beispielsweise durch Kleben. Die Vertiefung 38 durchsetzt die Trägerplatte 16 entlang einer Längsrichtung 40 bzw. Längsachse eines Nutzfahrzeugs 42, welches in Fig. 6 lediglich schematisch angedeutet ist. Die Vertiefungen 38 sind in Fig. 3 als langlochartige Querschnitte im Material der Trägerplatte 16 ausgestaltet.

In Fig. 4 sind exemplarisch mehrere die Trägerplatte 16 durchsetzende Leitungskanäle 50 dargestellt. Diese in den Zeichnungen teilweise nicht sichtbaren Leitungskanäle 50 erstrecken sich jeweils bis zu mindestens einem Aufnahmelager 18 und können (vorzugsweise optische oder elektrische) Sensoranschlüsse oder Anschlussleitungen der Lastkraftsensoren 20 aufnehmen oder durchleiten.

Eine gedachte Plattenebene der Trägerplatte 16 ist durch eine Querrichtung 46 bzw. Querachse und eine dazu rechtwinklig angeordnete Hochrichtung 54 bzw. Hochachse des Nutzfahrzeugs 42 aufgespannt. Durch eine entsprechende Anordnung bzw. Positionierung der Lastkraftsensoren 20 in der Trägerplatte 16 können mehrere Kraftkomponenten der vom Anhänger oder gezogenen Arbeitsgerät auf das Kupplungsmodul 10 bzw. auf das Nutzfahrzeug 42 einwirkenden Lastkräfte erfasst werden. So können etwa eine X-Komponente (in Längsrichtung 40), eine Y-Komponente (in Querrichtung 46) und eine Z-Komponente (in Hochrichtung 54) der Lastkräfte erfasst werden. Mit den in Fig. 2 sichtbaren Lastkraftsensoren 20 werden vorzugsweise die Y-Komponente und die Z-Komponente der Lastkräfte erfasst.

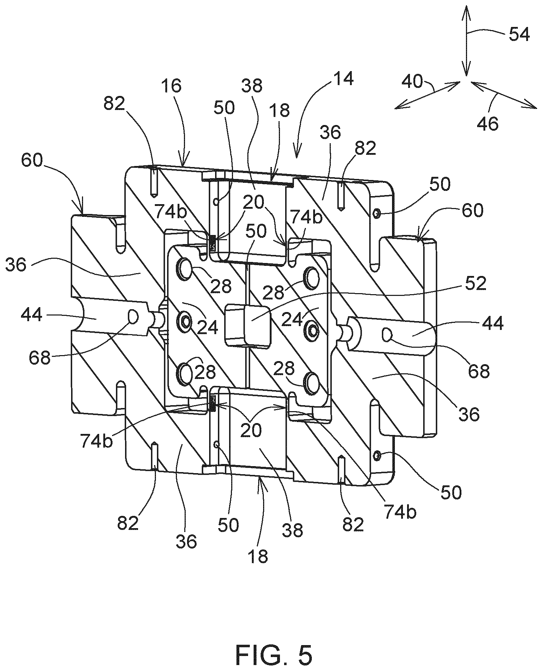

Fig. 5 zeigt die Trägerplatte 16 in einer geschnittenen Perspektive. Die Schnittebene liegt etwa in derselben Ebene ein, in der sich auch die Stege 74a gemäß Fig. 4 befinden. In Fig. 5 sind weitere Aufnahmelager 18 bzw. Vertiefungen 38 erkennbar, deren Innenwände Stege 74b aufweisen. Im Bereich dieser Stege 74b sind weitere Lastkraftsensoren 20 gelagert bzw. fixiert, z.B. durch Kleben. Bezüglich der vorgenannten Schnittebene können die Vertiefungen 38 in Fig. 5 spiegelbildlich ausgestaltet sein und entsprechend weitere Lastkraftsensoren 20 an Stegen 74b aufnehmen. Unabhängig von ihrer Anzahl sind die Lastkraftsensoren 20 an den Stegen 74b vorzugsweise dazu geeignet, die X-Komponente (in Längsrichtung 40) der Lastkräfte zu erfassen.

Die Aufnahmelager 18 bzw. Vertiefungen 38 sowohl gemäß Fig. 4 als auch gemäß Fig. 5 können durch ein Verschlussteil (z.B. Deckel) nach außen verschlossen und abgedichtet sein.

Fig. 6 zeigt das schematisch angedeutete Nutzfahrzeug 42 mit zwei daran befestigten Tragaufnahmen in Form zweier Tragschienen 56. Die Tragschienen 56 werden insbesondere in Kombination mit einem Traktor 70 als ein landwirtschaftliches Zugfahrzeug verwendet. Zwischen den beiden Tragschienen 56 ist das Kupplungsmodul 10 angeordnet und an den beiden Tragschienen 56 lösbar fixiert. Für diese lösbare Fixierung werden Traglöcher 58 verwendet, welche die Tragschienen 56 in Querrichtung 46 durchsetzen. Die Traglöcher 58 sind an jeder Tragschiene 56 entlang der Hochrichtung 54 aneinandergereiht angeordnet. In Fig. 6 werden für die lösbare Fixierung des Kupplungsmoduls 10 die am niedrigsten angeordneten Traglöcher 58 beider Tragschienen 56 benutzt, so dass eine niedrige Position des Kupplungsmoduls 10 erreicht wird. Die Traglöcher 58 ermöglichen eine höhenverstellbare Positionierung des Kupplungsmoduls 10, so dass beispielsweise das Kupplungsmodul 10 gemäß Fig. 2 höher positioniert und in Kombination mit einem Gelenkdeichsel-Anhänger oder gezogenen Arbeitsgerät verwendet werden kann.

Für die bereits erwähnte lösbare Fixierung des Kupplungsmoduls 10 an den Tragschienen 56 fluchten ausgewählte Traglöcher 58 der Tragschienen 56 entlang der Querrichtung 46 mit Montagelöchern 44 des Kupplungsmoduls 10. Die Montagelöcher 44 erstrecken sich entlang der Querrichtung 46 sowohl im Bereich der parallel zur Hochrichtung 54 verlaufenden Plattenabschnitte 36 als auch im Bereich zweier mit diesen Plattenabschnitten 36 fest verbundenen Schienenausleger 60. Die Schienenausleger 60 liegen etwa formschlüssig in Schienenkanälen 62 der Tragschienen 56 ein.

Für die lösbare Fixierung des Kupplungsmoduls 10 an den Tragschienen 56 werden zwei Montagebolzen 48 verwendet (Fig. 3). Hierbei durchsetzt jeder Montagebolzen 48 in Querrichtung 46 ein ausgewähltes Tragloch 58 und das mit diesem Tragloch 58 in Querrichtung 46 fluchtende Montageloch 44. Jeder der beiden Montagebolzen 48 wird in Querrichtung 46 arretiert, indem ein in Längsrichtung 40 verlaufender Arretierstift 64 ein Arretierloch 66 des jeweiligen Montagebolzens 48 durchsetzt. Dabei durchsetzt der Arretierstift 64 auch die Sensoreinrichtung 14 in einem Übergangsbereich 68 zwischen dem Schienenausleger 60 und dem benachbarten Plattenabschnitt 36. Der Arretierstift 64 wiederum ist in geeigneter mechanischer Weise durch einen Splint 72 an der Trägerplatte 16 lösbar lagegesichert.

Für eine zusätzliche mechanische Sicherung des Montagebolzens 48 und/oder des Arretierstiftes 64 und/oder des Splintes 72 ist eine Haltelasche 76 vorgesehen, welche an der Trägerplatte 16 fixiert (z.B. verschraubt) ist und eine oder mehrere hier nicht dargestellte kettenartige Halterung(en) trägt (Fig. 1, Fig. 2). Die kettenartige Halterung(en) dient bzw. dienen zur Aufhängung des Montagebolzens 48 und/oder des Arretierstiftes 64 und/oder des Splintes 72, so dass lose Bauteile am Kupplungsmodul 10 vermieden werden. Vorzugsweise ist entlang der Querrichtung 46 an beiden Seiten der Trägerplatte 16 jeweils eine Haltelasche 76 angeordnet.

Die entlang der Leitungskanäle 50 verlaufenden Sensoranschlüsse oder Anschlussleitungen der Lastkraftsensoren 20 können gebündelt bzw. gemeinsam in die Trägerplatte 16 hineingeführt und/oder aus der Trägerplatte 16 herausgeführt werden. Hierzu ist ein zentraler Plattenbereich 52 (Fig. 5) und/oder ein Führungsstutzen 78 (Fig. 1, Fig. 2) vorgesehen.

Mit der Trägerplatte 16 sind vorzugsweise zwei Zugösen 80 verbunden, welche jeweils mit einem Innengewinde 82 der Trägerplatte 16 verschraubt sind. Die Zugösen 80 sind als Transport- und Montagehilfe für das Kupplungsmodul 10 wirksam, beispielsweise wenn das Kupplungsmodul 10 in den Schienenkanälen 62 entlang der Hochrichtung 54 versetzt werden soll.

## Patentansprüche

1. Kupplungsmodul (10) zur lösbaren Befestigung an einem Nutzfahrzeug (42),
- mit einer Kupplungseinrichtung (12), welche zur lösbaren Kopplung mit einem Anhänger oder einem Arbeitsgerät ausgebildet ist, und
- mit einer Sensoreinrichtung (14), welche eine Trägerplatte (16) mit mindestens einem Aufnahmelager (18) zur Aufnahme mindestens eines Lastkraftsensors (20) enthält.

2. Kupplungsmodul nach Anspruch 1, **dadurch gekennzeichnet, dass** entlang einer Umfangsrichtung (34) der Trägerplatte (16) mehrere Aufnahmelager (18) für jeweils mindestens einen Lastkraftsensor (20) angeordnet sind.

3. Kupplungsmodul nach Anspruch 1 oder 2, **dadurch gekennzeichnet, dass** die Trägerplatte (16) in Umfangsrichtung (34) mehrere abgewinkelt miteinander verbundene Plattenabschnitte (36) aufweist.

4. Kupplungsmodul nach Anspruch 3, **dadurch gekennzeichnet, dass** ein Plattenabschnitt (36) mindestens zwei Aufnahmelager (18) aufweist.

5. Kupplungsmodul nach einem der vorhergehenden Ansprüche, **dadurch gekennzeichnet, dass** das Aufnahmelager (18) eine in der Trägerplatte (16) angeordnete Vertiefung (38) aufweist.

6. Kupplungsmodul nach Anspruch 5, **dadurch gekennzeichnet, dass** der Lastkraftsensor (20) an einer Innenwand (74a, 74b) der Vertiefung (38) gelagert ist.

7. Kupplungsmodul nach einem der vorhergehenden Ansprüche, **dadurch gekennzeichnet, dass** die räumliche Erstreckung der Trägerplatte (16) durch eine X-Richtung (40), eine Y-Richtung (46) und eine Z-Richtung (54) repräsentiert ist, welche rechtwinklig zueinander ausgerichtet sind, wobei die Plattenebene der Trägerplatte (16) in einer durch die Y-Richtung (46) und die Z-Richtung (54) aufgespannten Ebene einliegt.

8. Kupplungsmodul nach einem der vorhergehenden Ansprüche, **dadurch gekennzeichnet, dass** die Kupplungseinrichtung (12) mit der Trägerplatte (16) der Sensoreinrichtung (14) lösbar verbunden ist oder einstückig hergestellt ist.

9. Kupplungsmodul nach einem der vorhergehenden Ansprüche, **dadurch gekennzeichnet, dass** der Lastkraftsensor (20) mindestens einen Dehnungsmessstreifen aufweist.

10. Nutzfahrzeug (42, 70) mit einem daran lösbar befestigten Kupplungsmodul (10) nach einem der vorhergehenden Ansprüche, wobei das Kupplungsmodul (10) eine Sensoreinrichtung (14) mit einer Trägerplatte (16) enthält, welche mindestens ein Aufnahmelager (18) zur Aufnahme mindestens eines Lastkraftsensors (20) aufweist.

11. Nutzfahrzeug nach Anspruch 10, **dadurch gekennzeichnet, dass** das Kupplungsmodul (10) zwischen zwei am Nutzfahrzeug (42) befestigten Tragaufnahmen, insbesondere Tragschienen (56), angeordnet an diesen Tragaufnahmen (56) lösbar fixiert ist.

12. Nutzfahrzeug nach Anspruch 11, **dadurch gekennzeichnet, dass** mindestens eine Tragaufnahme (56) in einer Fahrzeug-Querrichtung (46) durch mehrere Traglöcher (58) perforiert ist, welche in einer Fahrzeug-Hochrichtung (54) aneinandergereiht sind, wobei ein Tragloch (58) der Tragaufnahme (56) in der Fahrzeug-Querrichtung (46) mit einem Montageloch (44) des Kupplungsmoduls (10) fluchtet.

13. Nutzfahrzeug nach Anspruch 12, **dadurch gekennzeichnet, dass** das Tragloch (58) und das Montageloch (44) in Fahrzeug-Querrichtung (46) von einem Montagebolzen (48) durchsetzt sind.

14. Nutzfahrzeug nach Anspruch 13, **dadurch gekennzeichnet, dass** der Montagebolzen (48) und das Kupplungsmodul (10) von einem in Fahrzeug-Längsrichtung (40) verlaufenden Arretierstift (64) durchsetzt sind.

15. Nutzfahrzeug nach einem der Ansprüche 10 bis 14, **dadurch gekennzeichnet, dass** es als ein landwirtschaftliches Zugfahrzeug (70) ausgebildet ist.
